Europäisches Patentamt

European Patent Office

Office européen des brevets

(11) Publication number: **0 404 223**
**A2**

## (12) EUROPEAN PATENT APPLICATION

(21) Application number: **90201511.4**

(22) Date of filing: **12.06.90**

(51) Int. Cl.⁵: **G05D 1/00, G05B 15/02, B64C 13/50**

(30) Priority: **23.06.89 GB 8914450**

(43) Date of publication of application:
**27.12.90 Bulletin 90/52**

(84) Designated Contracting States:
**DE ES FR GB IT SE**

(71) Applicant: **BRITISH AEROSPACE PUBLIC LIMITED COMPANY**
**11 Strand**
**London WC2N 5JT(GB)**

(72) Inventor: **Moore, Colin**
**Warton Aerodrome**
**Preston, Lancs PR4 1AX(GB)**

(74) Representative: **Eastmond, John et al**
**British Aerospace plc Corporate IPR Department, Headquarters P.O. Box 87 Building Q191 Royal Aerospace Establishment**
**Farnborough Hants GU14 6YU(GB)**

(54) **Actuator control system.**

(57) An actuator control system particularly for an aircraft includes intelligent local control (31) provided at the actuator (10) and responsive to an actuator demand signal from a central control (1). The local control (31) includes an actuator drive means (14), and means for monitoring position of the actuator in response to feedback data. The system includes multiple identical lanes, independent except for inter-lane communication to allow for cross-checking and averaging of feedback data.

*Fig. 1(a)*

EP 0 404 223 A2

This invention relates to a control system for actuators, in particular for an aircraft where the actuators may operate, for example, control surfaces.

In recent years fly-by-wire (FBW) techniques have been developed for aircraft in which the control surfaces, rather than being operated by direct mechanical or hydraulic connection with a pilot's controls, are operated by actuators responsive to signals received from, for example, a flight control computer (FCC). The FCC will receive an input data concerning various flight parameters, such as aircraft attitude and speed, and demand signals from the pilot's controls or an autopilot, and may produce as an output demand signals to operate actuators to move control surfaces, say, as required.

In known examples of such FBW systems the control and monitoring of the actuators, which may include a servo system, has been performed centrally by the FCC. This central control has certain disadvantages. Firstly, a large number of cables are required to each actuator. Up to 32 twin screened cables per actuator have been proposed. Secondly, a number of preferred actuator control and monitoring techniques are difficult to implement with central actuator control. Additionally, central control and monitoring of the actuators represents a substantial load on the processing capabilities of the FCC(s).

According to the present invention there is provided an actuator control system for an aircraft comprising, central control means responsive to flight parameters to generate actuator demand signals via a control lane, and local control means associated with each of a plurality of actuators and responsive to said demand signal to operate said actuators, each local control means including a servo system, and characterised in that each actuator is provide with a plurality of independent control lanes.

By means of such local control of an actuator the above mentioned disadvantages may be overcome, or at least mitigated. For example there may be a substantial reduction in the cable mass between the central control (eg FCC) and each actuator. The processing load on the central control is reduced, so that it may be utilised for other tasks, such as engine control.

The provision of independent control lanes provides increased safety and reliability. In a preferred embodiment, while these lanes are generally isolated from one another, means for interlane communication may be provided whereby the local servo system parameters (eg, ram and valve position) may be averaged between the lanes or voting logic techniques applied.

The actuator may be operated by an electric motor, in which case the local control means may include means for generating a current to energise the motor in response to an actuator demand signal. Preferably the motor is then a torque motor. Optimum drive demand signals for such a motor use pulse width modulation techniques to minimise electronic power dissipation. With long cable runs as would be associated with known central control systems the use of this technique is disadvantageous since the technique is known to produce considerable rf interference. With local control however, as proposed in our invention, which permits short or even integrated cable runs, the technique may be used without generating unacceptable rf interference signals. Preferably the motor current may be produced by a Mosfet 'H' bridge.

In a preferred embodiment the actuator includes a main valve and a ram, the servo system comprising first and second stage loop control for the valve and ram respectively.

An embodiment of the present invention will now be described by way of example and with reference to the accompanying drawings, in which:-

Figures 1(a) and 1(b) are views, perspective and schematic respectively, of an actuator with local control means, and

Figure 2 is a block circuit diagram showing an electronics unit of the local control means associated with one lane of an aircraft actuator control system.

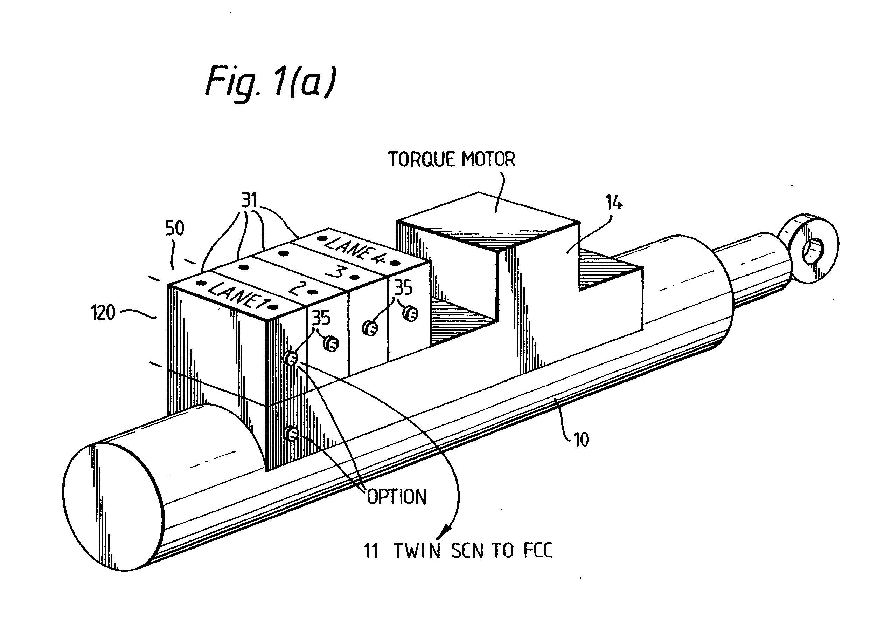

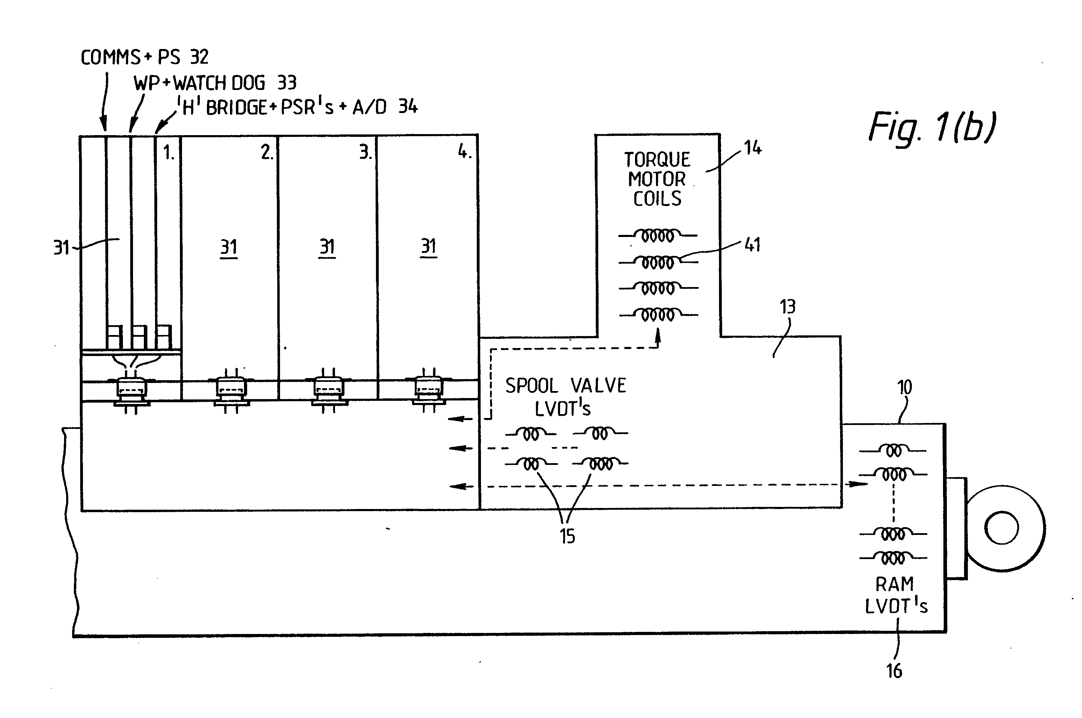

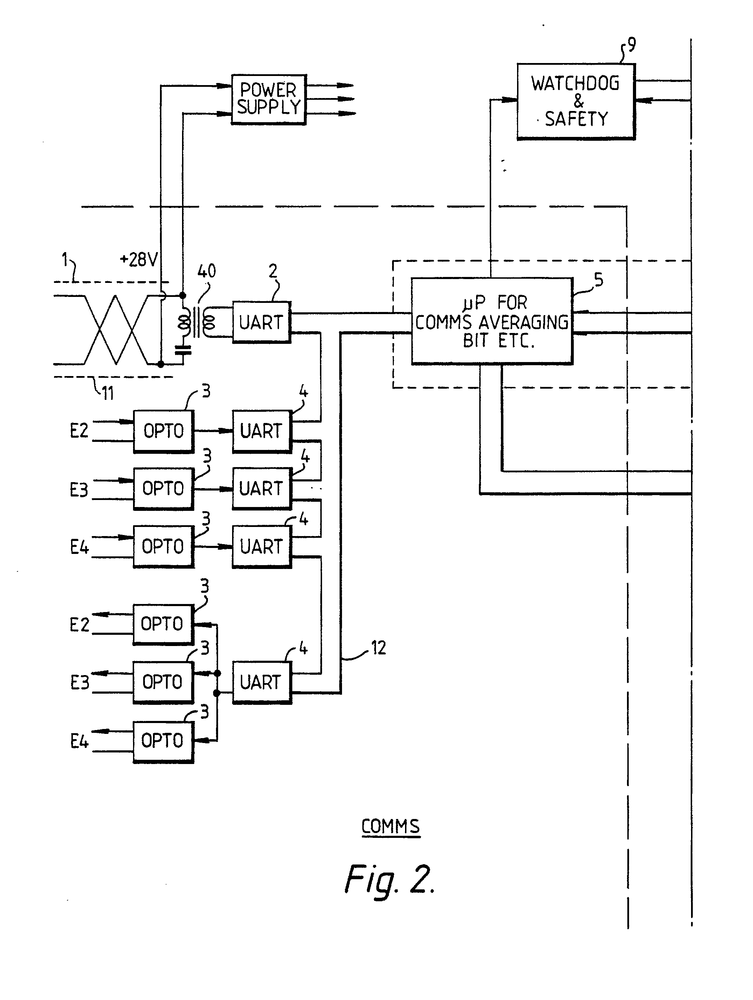

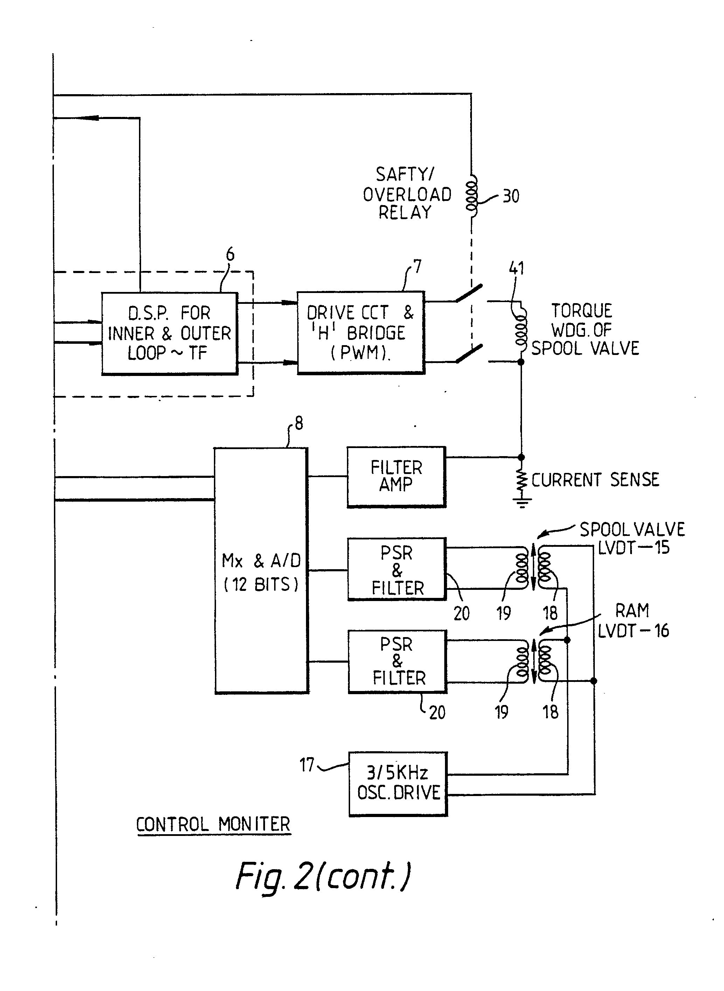

For clarity Figure 2 shows a schematic block diagram of the local electronics unit of one actuator control lane only, but in practice each actuator (10 in Figure 1) will have four separate and identical control lanes and associated electronics, each lane being controlled by a separate flight control computer (FCC) 1.

Each FCC 1 is responsive to various flight parameters and the pilot's controls (not shown) to produce an actuator demand signal in response to which the relevant actuator will move, for example, a wing flap.

The FCCs 1 are located in a central fuselage bay of the aircraft whilst the local electronics of each lane are located adjacent their associated actuator.

The local electronics of each lane may be regarded as having two parts; one for communications ("comms") and the other for control and monitoring of the actuator. Both parts are provided in an electronics unit at the actuator, and linked to the FCC by means of a twin screened cable (11 in Figure 1(a)) comprising a combined serial digital comms link for bi-directional data signals and dc power and return. The bi-directional serial digital comms signals are superimposed on a +28V dc power line by means of transformers at each end of the screen cable (11) one of which is shown at 14 Fig 2. The FCC acts as the comms link master providing actuator demand data at a rate of between 80Hz and 3KHz. Digital transmission of the actuator demand signal provides high noise immunity and permits parity checking etc, for high integrity. The local FCC actuator link electronics also includes a universal asynchronous receiver/transmitter (UART) 2. Status information is transmitted back to the FCC automatically after each data word is received or upon FCC request as will be discussed hereinafter.

The comms circuitry also includes six opto-isolators 3, for electrical isolation, connected in transmitter/receiver pairs to each of the other lanes. Each receiver and transmitter opto-isolator of a pair is connected to corresponding opto-isolators for transmission and reception respectively in the other three lane's electronic units. Four further UARTs 4 (three for receiving from and one for the transmission) are connected to the opto-isolators as shown to provide asynchronous unidirectional serial interlane data transmission on a internal communications bus 12. This interlane communication permits voter/monitor algorithms to be implemented in a comms microprocessor 5. In addition to handling communications, both with the FCC and the other lines the bus 12, via voting, averaging and monitoring the microprocessor 5 also includes built-in-testing (BIT) circuitry.

The control and monitoring part of the local electronics includes a digital signal control microprocessor 6 (DSP). The control microprocessor 6 receives as input, via the comms microprocessor 5, actuator demand signals from the FCC and actuator data from the other 3 lanes (averaged or disregarded as necessary by interlane algorithms by the comms microprocessor).

The actuator 10 includes a ram controlled by an electro-hydraulic spool valve 13, operated by a torque motor 14. As an output the control microprocessor 6 produces a torque current demand as a pulse width modulated (PWM) signal scaled by the valve of the +28dc voltage. This demand signal is fed to a drive circuit (CCT) and a Mosfet 'H' bridge 7 which in turn controls the current in the windings 41 of the torque motor 14.

Each actuator control lane includes three sets of feedback data; (i) torque winding current, (ii) spool valve position, and (iii) ram position.

The torque winding current is sensed, then filtered and amplified in a unit 21 before being digitised and multiplexed by a multiplexer and a 12 bit analogue-to-digital unit 8 with digitised spool valve and ram position data. The spool valve and ram positions are determined by respective linear variable differential transformers, (LVDT) 15, 16.

A common oscillator 17 drives the excitation windings of the spool valve and ram LVDTs is 15, 16. The LVDT outputs on windings 19 are phase sensitive rectified (PSR) and filtered in PSR and filter units 20 before being digitised and multiplexed in unit 8 with the torque winding current signal. There are four similar torque windings and sensors, main valve LVDTs and ram LVDTs; one of each for each lane. Each set of three sensors produces digitised feedback data in the way described above. This digitised feedback data from lane one is then supplied to the comms microprocessor 5 where it is averaged with the digitised feed back data received via UARTs from other lanes by means of interlane algorithms and supplied as digital ram position data to the FCC 1 via the bus 12, UART 2 and link 11.

The control of the actuator will now be described in more detail. There are two servo loops, the first stage controls the position of the spool in the main electro-hydraulic valve and includes the spool valve LUDT 15 and associated PSR and filter 20, this is referred to as the inner loop; the second stage referred to as the outer loop includes the RAM LVDT 16 and associate PBR and filter unit 20 and controls the position of the ram of the actuator. A ram position demand from the FCC is compared with the actual ram position (outer loop) and any difference creates a ram position error signal which is then used as a position input demand to the inner loop to move the spool valve in the correct direction so as to reduce the ram position error to zero, and hence to move the ram to the position demanded. The inner loop compares its position demand derived from the outer loop position error with the spool position and any difference drives the torque motor which moves the spool in the appropriate direction to reduce this error to zero. It will be seen that apart from the transmission of the initial position demand signal from the FCC the outer and inner loop feedback operations are confined to the local electronics at the actuator. In contrast prior art actuator control systems included the FCC in these loops with the consequent necessity for sending a plurality of feedback signals over a long multi-cable connection between FCC and actuator.

The inner loop must have a faster response (and therefore higher bandwidth) than the outer loop for system stability. With prior arrangements the outer loop has been controlled digitally while the inner loop was analogue -this was because the higher bandwidth required for the inner loop was easier to obtain by analogue rather than digital techniques. However by performing actuator control locally a considerable overhead is removed from the FCC and both inner and outer control loops can be performed digitally with one microprocessor. Digital control provides more consistent control from lane to lane and allows for their interchangeability.

The bandwidth of the servo must be less than one half of the digital iteration rate (this is the Nyquist Sampling Theorem) to avoid aliasing. Additionally anti-aliasing filters are used with a sharp cut-off prior to digitising the position feedback signals such that the remaining LVDT carrier signal and hf noise is less than the lower side band of the analogue-to-digital converter. The iteration rate for the outer loop is at least 80Hz (12.5ms), and that of the inner loop is at least 320Hz (3.125ms). Thus the inner loop spool position LVDT signal must be digitised every 3.125ms. This signal is passed between lanes, consolidated within each lane, then compared with outer loop error value and the difference value used as an input to the inner loop, then the control law calculations are performed to produce an output signal. Consolidation of the inner loop spool position is advantageous in producing equal current drive in the four separate torque motor coils, and in the event of a single lane failure the three remaining lanes share the additional burden equally.

A watchdog 9 may be provided for both the comms and control microprocessors. The watchdog comprises logic and counters driven by a separate clock such that if the microprocessors halt or jump to a false memory location then a safety relay 30 (normally energised) will be de-energised and interrupts the drive signal to the torque motor 14. The watchdog clock can be monitored by the microprocessors and fail action taken if this exceeds some defined limits.

Figure 1a and 1b shows a possible physical arrangement of the local control electronics on an actuator, in perspective and schematic sectional views respectively.

The actuator end of each lane includes a replanable electronics module 31. Each module is identical and can be replaced without affecting the remaining lanes. Each module may include three boards 32, 33, 34 for, respectively, communications and power supply (PS), control microprocessor and watchdog, and H-bridge, phase sensitive rectifiers and A/D converter. The torque motor coils,. spool valve and ram LVDTs are disposed separately from the modules but adjacent and connected thereto. Each lane also includes a connector 35 for the FCC link 11. As an alternative to the FCC actuator link 11 described above, fibre optics can be used; for example, one twin cable for dc power and return and two optical fibres (or a single multi mode optical fibre) for digital communications.

The mounting of the modular on the actuator may be by any suitable arrangement, but it may be necessary to provide some form of thermal insulation between the modules and the actuator since the oil in the latter may reach temperatures as high as 130 °C. Alternatively the control electronics for each lane may be disposed not on the actuator but closely adjacent to it.

## Claims

1 An actuator control system for an aircraft comprising, central control means (1) responsive to flight parameters to generate an actuator demand signal via a control lane, and local control means (31) associated with each of a plurality of actuators (10) and responsive to said demand signal to operate said actuators, each local control means (31) including a servo and characterised in that each actuator (10) is provided with a plurality of independent control lanes.

2 A control system according to Claim 1 wherein an actuator (10) is operated by an electric motor (14), said local control means (31) having means (7) for generating a current to energise said motor (14) in response to an actuator demand signal.

3 A control system according to Claim 2 wherein said motor (14) is a torque motor and said local control means (31) produces a torque current demand on a pulse width modulated signal for driving a Mosfet 'H' bridge and the torque motor.

4 A control system according to any of claims 2 or 3 wherein said local control means (31) is provided with a feedback signal indicative of said current.

5 A control system according to any preceding claim wherein said actuator includes a main valve and a ram, said servo system comprising first and second stage loop control for said valve and ram respectively.

6 A control system according to Claim 5 wherein both said first and second stage loop control are performed digitally.

7 A control system according to any preceding claim wherein said lanes are provided with means (3,4,12) for interlane communications whereby the local servo systems parameters may be averaged between said lanes, said lanes being otherwise isolated.

# Fig. 1(a)

TORQUE MOTOR

31

50

120

LANE 1

LANE 4

3

2

35

35

35

OPTION

11  TWIN SCN TO FCC

14

10

EP 0 404 223 A2

Fig. 1(b)

COMMS

*Fig. 2.*

Fig. 2(cont.)